# EUROPÄISCHE PATENTSCHRIFT

(11) **EP 2 411 834 B1**
(45) Veröffentlichungstag und Bekanntmachung des Hinweises auf die Patenterteilung: **04.05.2016**
(21) Anmeldenummer: 10704124.6
(22) Anmeldetag: 26.01.2010
(51) Int. Cl.: G01S 7/481, G01S 17/08

(54) **KERAMISCHER OPTIKTRÄGER**
CERAMIC OPTICAL SYSTEM SUPPORT
SUPPORT D'OPTIQUE CÉRAMIQUE

(30) Priorität: 23.03.2009 DE 102009001734
(43) Veröffentlichungstag der Anmeldung: 01.02.2012
(73) Patentinhaber: Robert Bosch GmbH, 70442 Stuttgart (DE)
(72) Erfinder: WOLF, Peter, 70771 Leinfelden-Echterdingen (DE); SKULTETY-BETZ, Uwe, 70771 Leinfelden-Echterdingen (DE); STIERLE, Joerg, 71111 Waldenbuch (DE)
(86) Internationale Anmeldenummer: PCT/EP2010/050818
(87) Internationale Veröffentlichungsnummer: WO 2010/108705

(56) Entgegenhaltungen:
- WO-A1-2009/012474
- DE-A1-102005 041 980
- US-A1- 2003 026 556

## Beschreibung

Die vorliegende Erfindung betrifft einen Optikträger, insbesondere für ein optisches Messgerät, mit einem Grundkörper, an dem Mittel zur Fixierung von Komponenten eines elektro-optischen Sende- und Empfangssystems vorgesehen sind. Des weiteren betrifft die vorliegende Erfindung ein Herstellungsverfahren für einen derartigen Optikträger. Außerdem betrifft die vorliegende Erfindung ein optisches Messgerät, insbesondere einen Laserentfernungsmesser mit einem Linsenhalter, einem Optikträger und einem Sende- und Empfangssystem.

### Stand der Technik.

Aus der DE 10 2005 041 980 A1 ist ein optisches Messgerät zur Laserentfernungsmessung bekannt, dass als handgehaltenes Gerät ausgebildet ist. In dem Laserentfernungsmesser ist als zentrales Element ein Optikträger aus Kunststoff vorgesehen, an dem ein elektro-optisches Sende- und Empfangssystem gehalten ist. Dazu weist der Optikträger Aufnahmen und Befestigungsmittel für die optischen und/oder elektronischen Komponenten des Messgerätes auf. So ist an dem Frontbereich des Optikträgers einstückig ein Linsenhalter mit einer Aufnahme für eine Empfangsoptik vorgesehen. Des weiteren ist an dem Optikträger eine Leiterplatte mit einer Laserdiode mit davor montierter Kollimatorlinse zur Erzeugung eines Laserstrahls und einer lichtempflichlichen Empfangsdiode gehalten. Die Leiterplatte ist in dem Messgerät derart positioniert, dass die Laserdiode den Lichtstrahl durch die Sendeoptik abstrahlen kann und die lichtempfindliche Empfangsdiode im Brennpunkt der Empfangsoptik positioniert ist. Zur Verbesserung der Messgenauigkeit und zur Reduktion von Messfehlern sind die Lichtpfade für das Senden und Empfangen parallel angeordnet. Dadurch wirken sich äußere Einflüsse auf den Optikträger gleichermaßen auf die beiden Lichtpfade aus.

Der Optikträger mit dem daran fixierten elektro-optischen Sende- und Empfangssystem ist zusammen mit einer Anzeigevorrichtung, einer Eingabevorrichtung und einer Energieversorungsvorrichtung in einem gemeinsamen Gehäuse montiert. Im Betrieb erfolgt die Betätigung des Laserentfernungsmessers durch die Eingabevorrichtung. Daraufhin wird von der Laserdiode ein Laserstrahl auf einen Gegenstand abgestrahlt, zu dem der Abstand gemessen werden soll. Der auf den Gegenstand projektierte Lichtpunkt wird über die Empfangsoptik auf die lichtempfliche Empfangsdiode gebündelt und ausgewertet. Der durch die Messung gewonnene Abstandswert wird über die Anzeigevorrichtung ausgegeben.

Aus der WO 2009/012474 A1 ist ein Entfernungsmesssystem mit einem Befestigungselement für ein Gehäuse der emittierenden Laserdiode und ein Gehäuse der Detektionseinheit in Form eines L-förmigen Chassis bekannt. Lasergehäuse und Detektionsgehäuse der Vorrichtung der WO 2009/012474 A1 werden dabei an dem Befestigungswinkel angeschraubt. Der Befestigungswinkel kann zudem auch eine Linse des Empfangssystems aufnehmen. Die WO 2009/012474 A1 offenbart, dass ein solches Chassis prinzipiell auch aus Keramik gefertigt sein kann.

Aus der US 2003/0026556 A1 ist ein Interface-Element bekannt, welches als "optical subassembly" (OSA) in einer optischen Datenkommunikationsleitung dient. Das Interface der US 2003/0026556 A1 dient insbesondere der Transformation von elektrischen Signalen in optische Signale bzw. der umgekehrten Transformation von optischen Signalen in elektrische Signale. Das Interface der US 2003/0026556 A1 weist dazu - je nach Funktionsweise -einen oder mehrere optische Sender oder einen oder mehrere Empfänger auf, die an einem elastischen Leitungselement befestigt sind. Zur Erhöhung der Stabilität dieser Anordnung wird das flexible Leitungselement der Vorrichtung der US 2003/0026556 A1 von einem massiven Block abgestützt, der in einer Ausführungsform der Vorrichtung aus einer Keramik bestehen kann.

In der Praxis unterliegen optische Messgeräte hohen Anforderungen an die mechanische Belastbarkeit. Bereits während der Montage können Kräfte auf den Optikträger wirken, die zu Verformungen führen können. Auch kann das Gerät im Gebrauch Stößen ausgesetzt und so verformt werden. Dies kann nur zu einem Teil über konstruktive Maßnahmen ausgeglichen oder verhindert werden. Hier sind besonders für handgehaltene optische Messgeräte aufgrund ihres Funktionszwecks Grenzen vorgegeben. So ist Stahl zwar ein geeigneter Werkstoff, da er einen großen Elastizitätsmodul aufweist (siehe Tabelle 1). Alu-Druckguss und Magnesiumguss sind diesbezüglich weniger geeignet und Kunststoff weist den geringsten Elastizitätsmodul auf. Allerdings ist aus Gewichtsgründen die Verwendung von Stahl nachteilig, da dies der Schwerste der in Tabelle 1 aufgelisteten Werkstoffe ist.

**Tabelle 1**

| **Material** | **Elastizitätsmodul** |
|---|---|
| Stahl (Blechbiegetell, St 37) | 210000 N/mm² |
| Alu-Druckguss (GD-AlSi 12) | 75000 N/mm² |
| Magnesiumguss (GD-MgAl5) | 50000 N/mm² |
| Kunststoff (PPS-GF40) | 13000 N/mm² |

Des weiteren unterliegen die Messgeräte thermischen Einflüssen, z.B. durch Sonneneinstrahlung. Wenn der Optikträger fest mit dem Gehäuse verbunden ist, kann dies bei einseitiger Erwärmung zu einer Verbiegung führen, wodurch der Optikträger deformiert wird und die Messgenauigkeit sinkt. Daher ist es wünschenswert, dass das Material einerseits eine hohe Wärmeleitfähigkeit und andererseits einen niedrigen Wärmeausdehnungskoeffizienten aufweist. Wie sich aus Tabelle 2 ersehen lässt, ist diese Kombination bei Stahl am geeignetsten, während sie bei Kunststoff am wenigsten geeignet ist.

**Tabelle 2**

| **Material** | **Wärmeleitfähigkeit** | **Wärmeausdehnungskoeffizient** |
|---|---|---|
| Stahl (Blechbiegeteil, St 37) | 48-58 W/mK | 13 µm/mK |
| Alu-Druckguss (GD-AlSi12) | 160 W/mK | 21 µm/mK |
| Magnesiumguss (GD-MgAl5) | 200 W/mK | 26 µm/mK |
| Kunststoff (PPS-GF40) | 0,3 W/mK | 20-40 µm/mK |

Da das elektro-optische Sende- und Empfangssystem elektronische Bauteile enthält, die aufgrund der verwendeten Modulationsfrequenzen von bis zu 1 GHz eine elektromagnetische Abstrahlung erzeugen, sind auch Anforderungen an die elektromagnetische Verträglichkeit zu beachten. Dabei kann der Optikträger zwar prinzipiell als Abschirmung dienen, wenn er aus leitendem Material hergestellt ist. Dies ist jedoch aufgrund der hohen verwendeten Modulationsfrequenzen schwierig. Daher sollte der Optikträger aus einem Material mit einer geringen elektrischen Leitfähigkeit hergestellt werden, so dass er selber nicht als Antenne für das elektro-optische Sende- und Empfangssystem dienen kann und damit nicht zur Abstrahlung beiträgt. Die metallischen Materialien Stahl, Alu-Druckguss und Magnesiumguss weisen allesamt eine hohe Leitfähigkeit auf, so dass sie unter dem Aspekt der elektromagnetischen Verträglichkeit wenig geeignet sind. Lediglich Kunststoff als Isolator ist hier gut geeignet.

**Tabelle 3**

| **Material** | **elektrische Leitfähigkeit** |
|---|---|
| Stahl (Blechbiegeteil, St 37) | ca. 10 m/Ohm mm² |
| Alu-Druckguss (GD-AlSi 12) | 19-22 m/Ohm mm² |
| Magnesiumguss (GD-MgAl5) | 8 m/Ohm mm² |
| Kunststoff (PPS-GF40) | isoliert |

Außerdem weisen die im Druckguss oder Spritzdruckguss hergestellten Optikräger herstellungsbedingt Eigenspannungen auf. Dieser Effekt ist prinzipiell auch bei Stahlblechbiegeteilen vorhanden. Diese Eigenspannungen relaxieren über die Lebensdauer und Temperatur, so dass mit der Zeit eine Dejustage des optischen Systems auftritt.

Abhängig von den verwendeten Materialien sind für den Optikträger und damit das optische Messgerät herstellungsbedingte Grenzen für die Genauigkeit vorgegeben. Die herstellungsbedingte Genauigkeit ist bei Alu-Druckguss am geringsten und nimmt über Magnesiumguss und Kunststoff hin zu Stahl zu.

Bei der Montage des optischen Messgeräts wird häufig Klebstoff verwendet, da das Kleben Spannungen in dem Optikträger durch die Montage weitgehend vermeidet und bei geringen Kosten mit einer hohen Genauigkeit durchgeführt werden kann. Hier sind Metallgussmaterialien generell weniger geeignet als Stahl oder Kunststoff, da sie allgemein schlechtere Klebeeigenschaften aufweisen. Auch ist die Verwendung von Klebstoffen eingeschränkt, da z.B. Metalle nicht lichtdurchlässig sind, so dass die Verwendung von lichthärtendem Klebstoff zur schnelleren Durchführung des Klebvorgangs nicht möglich ist. Lediglich Kunststoffmaterialien können lichtdurchlässig hergestellt werden, so dass ein lichthärtender Klebstoff verwendet werden kann.

Insgesamt ist festzustellen, dass kein Material alle gewünschten Anforderungen erfüllt. Die geeignetsten Materialien scheinen Stahl oder Kunststoff zu sein, wobei Kunststoff insbesondere bezüglich seiner Stabilität und thermischen Eigenschaften nachteilig ist, wohingegen Stahl insbesondere hinsichtlich der elektromagnetischen Verträglichkeit kritisch ist. Darüber hinaus ist insbesondere die Eigenspannung bei allen bisher verwendeten Materialien als nachteilig anzusehen.

Aufgabe der vorliegenden Erfindung ist es daher, einen Optikträger bereit zu stellen, der gleichzeitig eine hohe mechanische und thermische Belastbarkeit aufweist, elektromagnetisch gut verträglich ist, eine hohe Lebensdauer aufweist, mit einer hohen Genauigkeit herzustellen und auf eine einfache Weise zu montieren ist.

### Offenbarung der Erfindung

Diese Aufgabe wird erfindungsgemäß dadurch gelöst, dass der Optikträger ein keramischer Optikträger ist, der bevorzugt im Ceramic Injection Molding-Verfahren hergestellt ist. Dieses Herstellungsverfahren ermöglicht die Gestaltung von komplexen Bauteilen aus keramischen Werkstoffen, die mit herkömmlichen keramischen Herstellungsverfahren bisher nicht durchgeführt werden konnte. Dabei haben sich Al₂O₃ sowie eine Mischung aus Al₂O₃ und ZrO₃ als geeignete Werkstoffe erwiesen.

Keramische Materialien zeichnen sich gegenüber den bisher verwendeten Materialien durch eine besonders hohe Festigkeit aus. Bei der Verwendung von Al₂O₃ liegt der Elastizitätsmodul bei 390000 N/m². Auch die thermischen Eigenschaften dieser Keramik sind gut geeignet, da sie bei einer hohen Wärmeleitfähigkeit von 30 W/mK lediglich einen Wärmeausdehnungskoeffizienten von 8,2 µm/mK besitzt. Damit ist die Wärmeausdehnung besonders gering, während gleichzeitig die hohe Wärmeleitfähigkeit eine gleichmäßige Verteilung der Wärme über den gesamten Optikträger bewirkt. Dadurch erfährt der Optikträger bei Erwärmung eine gleichmäßige Längenänderung ohne Verformungen. Weiterhin stellt Keramik einen Isolator dar, so dass die Gefahr von elektromagnetischer Unverträglichkeit durch den Optikträger ausgeschlossen ist. Außerdem weist die Keramik eine hohe Klebbarkeit auf, die allen bisher verwendeten Materialien überlegen ist.

Da keramische Bauteile bei der Herstellung gesintert, also bei einer hohen Temperatur ausgehärtet werden, sind sie praktisch spannungsfrei, so dass eine Dejustierung des optischen Systems durch ein Relaxieren von Spannungen nicht auftritt. Des weiteren ist die herstellungsbedingte Genauigkeit von Keramik im Ceramic Injection Molding-Verfahren besonders hoch und der Genauigkeit bei der Verwendung von Stahl gleichzusetzen.

Insgesamt ergibt sich, dass ein keramischer Optikträger einem Optikträger aus konventionellen Materialien in nahezu allen genannten Aspekten überlegen ist.

In weiterer Ausgestaltung der Erfindung kann der Optikträger aus einer wenigstens in einem Wellenlängenbereich zumindest teilweise lichtdurchlässigen Keramik , insbesondere einer UV-durchlässigen Keramik hergestellt sein. Dies ermöglicht die Verwendung von lichthärtenden Klebstoffen zur Montage anderer, selbst nicht lichtdurchlässiger Komponenten an dem Optikträger. Derartige Klebstoffe sind im Stand der Technik weit verbreitet und aufgrund ihrer leichten Handhabung gut für einen klebenden Verbindungsprozess geeignet. So ist beispielsweise bei der Verwendung einer Al₂O₃ Keramik eine ausreichende Belichtung bei einer Materialstärke von maximal 2 mm möglich, wobei Al₂O₃ für einen breiten Wellenlängenbereich teilweise durchlässig ist, der Wellenlängen von 350 nm bis 635 nm umfasst.

Des weiteren kann ein Linsenhalter integral mit dem Optikträger ausgebildet sein. Die einteilige Ausführung reduziert die auftretenden Fertigungstoleranzen, und die in dem Linsenhalter gehaltenen Linsen werden mit einer verbesserten Festigkeit an dem Optikträger gehalten. Außerdem entfällt ein Montageschritt für die Verbindung von Linsenhalter und Optikträger, was die Herstellungskosten für das optische Messgerät und die Ausschussquote reduziert.

Bei einer alternativen Ausgestaltung der Erfindung kann ein Linsenhalter separat vorgesehen und mit dem Optikträger verbindbar sein, wobei der Linsenhalter mit einer tubusförmigen Aufnahme für wenigstens eine Linse ausgebildet ist. Insbesondere kann die tubusförmige Aufnahme zur Aufnahme zwei hintereinanderliegender Linsen ausgebildet sein. Somit können in dem Linsenhalter auch komplexe optische Eigenschaften realisiert werden. Aus Fertigungsgründen hat es sich dabei als vorteilhaft erwiesen, die Linsen jeweils von den gegenüber liegenden Endbereichen in den Linsenhalter einzusetzen. So ist die Auswahl der verwendbaren Linsen nicht auf solche beschränkt, die durch die Aufnahme an der außenliegenden Seite hindurch montierbar sind.

Zusätzlich kann der Optikträger an seinem Grundkörper wenigstens einen axialen Vorsprung und eine elektro-optische Sende- und Empfangseinheit eine zu dem Vorsprung des Grundkörpers korrespondierende Aussparung aufweisen, die im zusammengebauten Zustand ineinandergreifen. Dabei kann die elektro-optische Sende- und Empfangseinheit eine Leiterplatte umfassen, in der die Aussparung vorgesehen ist. Somit wird die Montage der elektro-optischen Sende- und Empfangseinheit an dem Grundkörper erleichtert und die Positioniergenauigkeit erhöht. Auf der Leiterplatte sind eine Laserdiode und eine lichtempfindliche Diode, beispielsweise eine APD für das Senden bzw. das Empfangen von Licht angeordnet. Dabei sind die Vorsprünge und Aussparungen vorzugsweise in der Nähe der Laserdiode angeordnet, damit für diese eine besonders genaue Positionierung erreicht wird.

Auch können an der Außenseite des Grundkörpers Positionier- und Befestigungselemente vorgesehen sein, mit denen eine Linse, insbesondere eine Kollimatorlinse an den Grundkörper montierbar ist. Durch die direkte Verbindung mit dem Grundkörper kann die Kollimatorlinse einfach montiert werden, insbesondere durch ein Klebeverfahren.

Schließlich kann in dem Grundkörper wenigstens eine zwischen den Endbereichen verlaufende Aufnahme vorgesehen sein, in die ein Tubus mit einem Bandpassfilter einsetzbar ist. Damit kann der Tubus auf einfache Weise im optischen Pfad positioniert und zusätzliche optische Elemente können in den optischen Pfad eingebracht werden. Durch die Verwendung eines Tubus mit einer röhrenförmigen Ummantelung kann eine Abschirmung des optischen Pfades sichergestellt werden.

Hinsichtlich weiterer vorteilhafter Ausgestaltungen der Erfindung wird auf die Unteransprüche sowie auf die nachfolgende Beschreibung der Ausführungsbeispiele unter Bezugnahme auf die beiliegende Zeichnung verwiesen. In der Zeichnung zeigt:
- Figur 1: einen Optikträger mit Sende- und Empfangssystem gemäß einer ersten Ausführungsform der vorliegenden Erfindung in Explosionsdarstellung,
- Figur 2: die Baugruppe aus Figur 1 mit daran angebrachten optischen Komponenten als Längsschnitt,
- Figur 3: die Baugruppe aus Figur 1 mit einem daran vorgesehen Display zur Montage in einem Gehäuse eines Laserentfernungsmessers,
- Figur 4: einen erfindungsgemäßen Optikträger gemäß einer zweiten Ausführungsform der vorliegenden Erfindung, der integral mit einem Linsenhalter ausgeführt ist, in perspektivischer Ansicht, und
- Figur 5: den Optikträger aus Figur 3 mit Sende- und Empfangseinheit in Explosionsdarstellung.

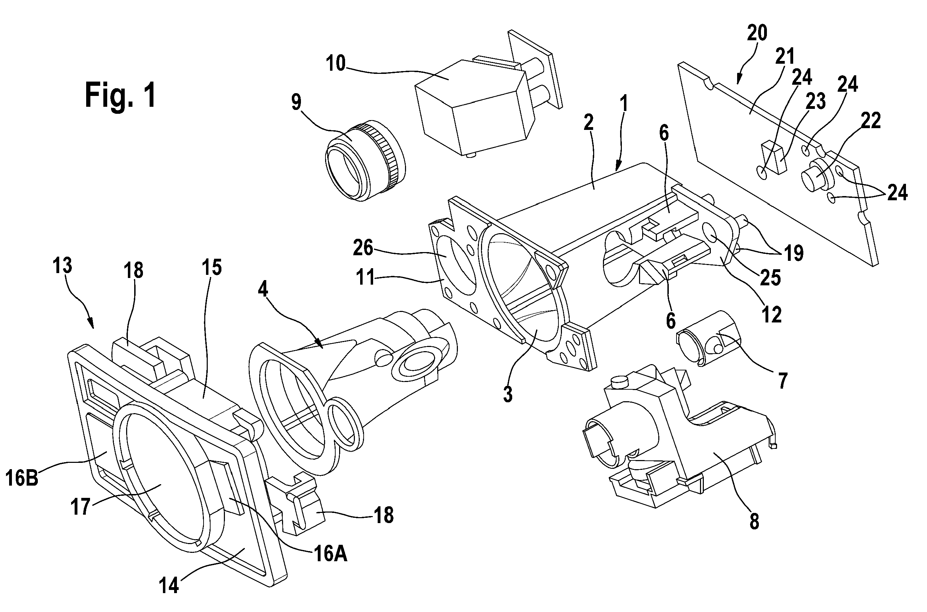

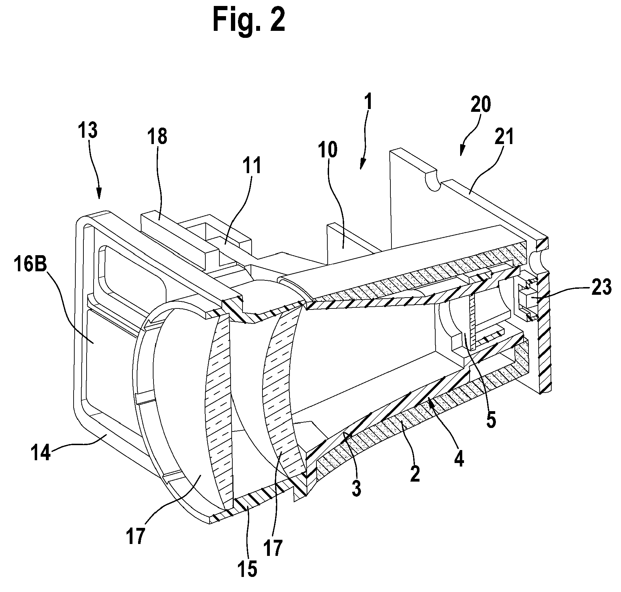

Figuren 1 und 2 zeigen einen Optikträger 1 mit einem Sende- und Empfangssystem für einen Laserentfernungsmesser M gemäß einer ersten Ausführungsform der vorliegenden Erfindung. Der Optikträger 1 besteht aus einer Al₂O₃-Keramik und ist im Ceramic Injection Molding-Verfahren hergestellt. Alternativ ist auch die Verwendung einer Keramik aus Al₂O₃ und ZrO₃ möglich.

Der Optikträger 1 umfasst einen Grundkörper 2 mit einer röhrenförmigen Aufnahme 3, die den Grundkörper 2 axial durchsetzt. In die röhrenförmige Aufnahme 3 ist ein Tubus 4 mit einem darin gehaltenen Bandpassfilter 5 eingesetzt. Seitlich sind an dem Optikträger 1 zwei Positionier- und Befestigungselemente 6 vorgesehen, mit denen eine Kollimatorlinse mit Halter 7 an dem Grundkörper 2 positioniert und mit einer Klebeverbindung daran fixiert ist. Des Weiteren ist an dem Optikträger 1 auf der Seite der Kollimatorlinse mit Halter 7 ein Referenzklappenelement 8 befestigt. An der gegenüberliegenden Seite des Grundkörpers 2 ist ein Zieloptikmodul mit Keilprismen 9 und einem Umlenkprisma mit Leiterplatte 10 vorgesehen. An den Stirnseiten weist der Grundkörper 2 zwei Endflansche 11, 12 auf.

An dem vorderen Endflansch 11 ist ein Linsenhalter 13 befestigt. Diese umfasst eine Frontplatte 14, in der eine tubusförmige Aufnahme 15 sowie ein rechtes und ein linkes seitliches Fenster 16A, 16B vorgesehen sind. In der tubusförmigen Aufnahme 15 sind zwei Linsen 17 gehalten. Des weiteren weist der Linsenhalter 13 zwei seitliche Befestigungselemente 18 mit einem U-förmigen Querschnitt auf, mit denen er auf den vorderen Endflansch 11 des Optikträgers 1 aufgesteckt ist. Im Verbindungsbereich sind die Befestigungselemente 18 an dem vorderen Endflansch 11 festgeklebt.

Der hintere Endflansch 12 ist mit vier von dem Grundkörper 2 wegzeigenden Vorsprüngen 19 zur Montage einer Sende- und Empfangseinheit 20 ausgeführt, von denen nur 3 in der Zeichnung sichtbar sind. Die Sende- und Empfangseinheit 20 umfasst eine Leiterplatte 21, deren dem Optikträger 1 zugewandte Seite eine Laserdiode 22 und eine lichtempfindliche Diode (APD) 23 trägt. In der Leiterplatte 21 sind vier kreisförmige Verbindungslöcher 24 vorgesehen, die mit den Vorsprüngen 19 an dem hinteren Flansch 12 korrespondieren. Bei der Montage werden die Vorsprünge 19 mit den Verbindungslöchern 24 in Eingriff gebracht und die Sende- und Empfangseinheit 20 an dem hinteren Endflansch 12 des Optikträgers 1 durch eine Klebeverbindung fixiert.

Im zusammengebauten Zustand liegen die Laserdiode 22, ein Durchlass 25 des hinteren Endflanschs 12, die Kollimatorlinse mit Halter 7, das Referenzklappenelement 18 und das rechte Fenster 16A auf einer Achse, die einen Sendepfad für das von der Laserdiode 22 ausgestrahlte Licht bildet. Dabei dient die Kollimatorlinse 7 dazu, das von der Laserdiode 22 abgestrahlten Licht zu einem parallelen Strahl zu bündeln. In dem Referenzklappenelement 8 wird eine Referenzmessung des abgestrahlten Laserlichts zur Justierung des Laserentfernungsmessers M durchgeführt. Der Laserstrahl tritt durch das rechte Fenster 16A, in das eine Scheibe als Linse eingesetzt ist, unverändert aus.

Das abgestrahlte Laserlicht erzeugt auf einem nicht gezeigten Gegenstand einen Lichtpunkt, der von dem Laserentfernungsmesser M erfasst wird. Dazu dient ein Empfangspfad, der sich durch die zwei Linsen 17 und den Tubus 4 mit dem darin enthaltenen Bandpassfilter 5 zu der lichtempfindlichen Diode 23 erstreckt. Die beiden Linsen 17 bewirken eine Fokussierung des eintreffenden Lichts auf die lichtempfindliche Diode 23. Beim Durchgang durch den Bandpassfilter 5 werden Lichtanteile mit einer Wellenlänge, die von dem durch die Laserdiode 22 abgestrahlten Licht verschieden ist, weitgehend herausgefiltert, so dass ausschließlich von der Laserdiode 22 abgestrahltes Licht auf die lichtempfindliche Diode 23 trifft und dort erfasst wird.

Ein optischer Zielmesspfad erstreckt sich entlang einer Achse, die von dem linken Fenster 16B, einer Durchtrittsöffnung 26 in dem vorderen Endflansch 11, den Keilprismen 9 und dem Umlenkprisma mit Leiterplatte 10 gebildet wird. Dadurch kann der zu vermessende Gegenstand genau anvisiert und sichergestellt werden, dass der Laser auf den gewünschten Gegenstand trifft.

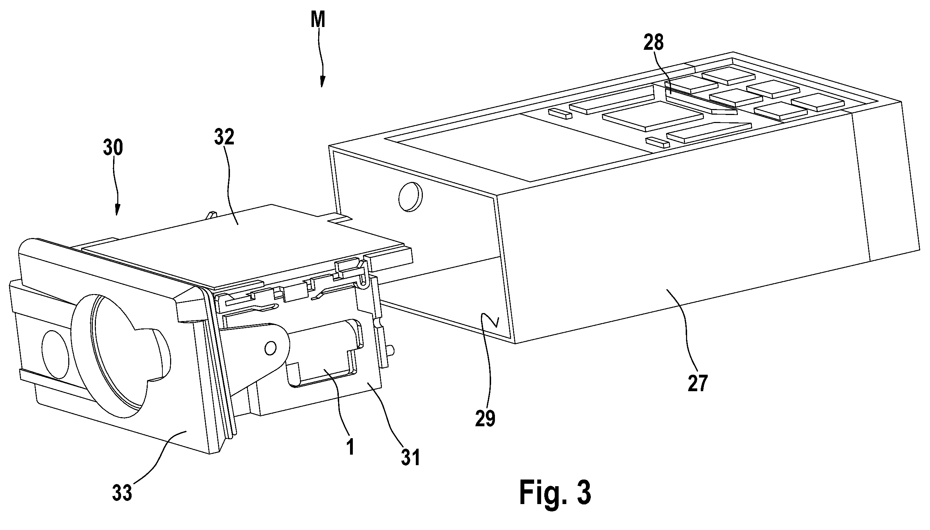

In der Figur 3 ist das Messgerät in seiner Gesamtheit gezeigt. Es umfasst ein Gehäuse 27 mit einer Bedieneinheit 28, dass eine stirnseitige Öffnung 29 aufweist. Des weiteren ist eine Messeinheit 30 vorgesehen, die als zentrales Element den zuvor beschriebenen Optikträger 1 mit den daran gehaltenen Komponenten enthält. Der Optikträger 1 ist von einem U-förmigen Displayhalter 31 umgeben, der zwischen den freien Enden seiner Schenkel ein Display 32 hält. Der an dem Optikträger 1 angebrachte Linsenhalter 13 ist an seiner Außenseite von Gummimanschette 33 umgeben, die an dem Displayhalter 31 montiert ist. Diese Messeinheit 30 wird von der offenen Stirnseiten in das Gehäuse 27 eingesetzt, wobei die Gummimanschette 33 die stirnseitige Öffnung 29 verschließt. In dem Gehäuse 27 ist zusätzlich eine nicht gezeigte Energieversorgungseinheit vorgesehen.

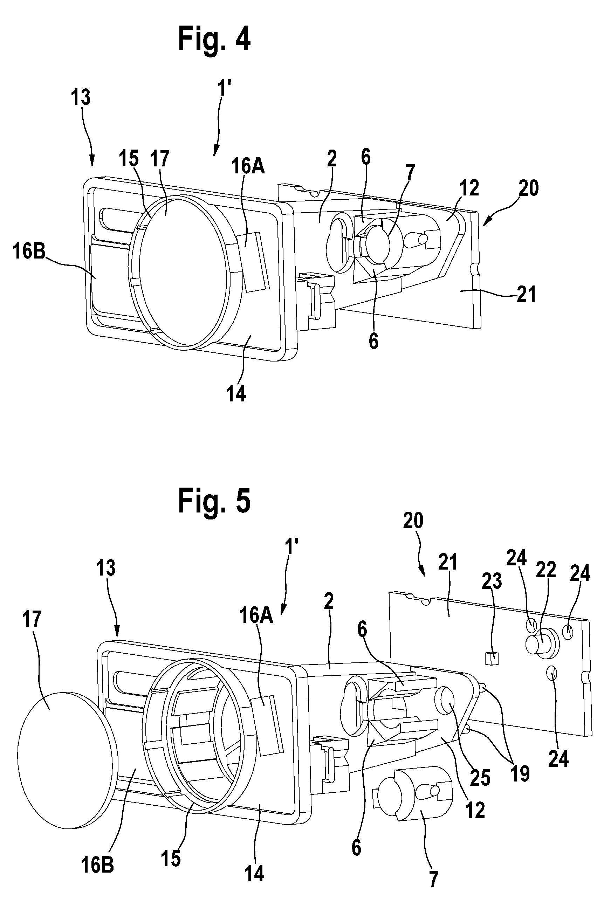

In den Figuren 4 und 5 ist ein Optikträger 1' gemäß einer zweiten Ausführungsform der vorliegenden Erfindung gezeigt. Der Optikträger 1' der zweiten Ausführungsform ist weitgehend identisch mit dem der ersten Ausführungsform, weshalb für gleiche Bauteile identische Bezugsziffern verwendet werden.

Der Optikträger 1' umfasst einen Grundkörper 2 mit zwei seitlichen Positionierungs- und Befestigungselementen 6, an denen wie zuvor eine Kollimatorlinse mit Halter 7 gehalten ist. An seinem vorderen Ende ist der Grundkörper 2 integral mit einem Linsenhalter 13 ausgeführt. Der Linsenhalter 13 umfasst wie in der ersten Ausführungsform eine Frontplatte 14 mit einer zentralen tubusförmigen Aufnahme 15 und zwei seitlichen Fenstern 16A, 16B. In die tubusförmige Aufnahme 15 ist von außen eine Linse 17 eingesetzt.

An dem rückseitigen Ende des Grundkörpers 2 ist ein hinterer Endflansch 12 vorgesehen, der identisch zu dem aus der ersten Ausführungsform ausgebildet ist. Daran ist eine Sende- und Empfangseinheit 20 angebracht, die identisch zu der aus der ersten Ausführungsform ist.

Trotz der geringfügig unterschiedlichen Struktur des Optikträgers 1' im Vergleich zu der der ersten Ausführungsform ist die Anordnung der einzelnen Komponenten identisch zu der in dem zuvor beschriebenen Ausführungsbeispiel. Damit ergeben sich prinzipiell gleichartige optische Achsen und gleichartige Wirkungsweisen der einzelnen Komponenten. In der zweiten Ausführungsform können eine nicht explizit gezeigte Referenzklappeneinheit und ein Zieloptikmodul an dem Optikträger 1' wie zuvor beschrieben angebracht werden. Die Funktion eines Messgerätes M, das, wie zuvor unter Bezug auf Figur 3 für die erste Ausführungsform beschreiben wurde, gebildet ist, ist identisch zu dem der ersten Ausführungsform.

## Patentansprüche

1. Keramischer Optikträger (1, 1'), insbesondere für ein optisches Messgerät (M), mit einem Grundkörper (2), an dem Mittel zur Fixierung eines elektro-optischen Sende- und Empfangssystems für einen Laserentfernungsmesser vorgesehen sind, **dadurch gekennzeichnet, dass** der Grundkörper (2) eine, den Grundkörper axial durchsetzende, röhrenförmige Aufnahme aufweist.

2. Optikträger (1, 1') nach Anspruch 1, **dadurch gekennzeichnet, dass** an der Außenseite des Grundkörpers (2) Positionier- und Befestigungselemente (6) vorgesehen sind, mit denen eine Linse (7), insbesondere eine Kollimatorlinse an dem Grundkörper (2) montierbar ist.

3. Optikträger (1, 1') nach einem der Ansprüche 1 oder 2, **dadurch gekennzeichnet, dass** der Grundkörper (2) wenigstens einen axialen Vorsprung (19) zur Fixierung einer elektro-optischen Sende- und Empfangseinheit (20) aufweist.

4. Optikträger (1, 1') nach einem der vorhergehenden Ansprüche, **dadurch gekennzeichnet, dass** der Optikträger (1. 1') aus einer wenigstens in einem Wellenlängenbereich zumindest teilweise lichtdurchlässigen Keramik, insbesondere einer UV-durchlässigen Keramik hergestellt ist.

5. Optikträger (1, 1') nach Anspruch 4, **dadurch gekennzeichnet, dass** der Optikträger (1, 1') aus Al₂O₃-Keramik oder einer Al₂O₃ und ZrO₃-Keramik hergestellt ist.

6. Optikträger (1, 1') nach einem der vorhergehenden Ansprüche, **dadurch gekennzeichnet, dass** ein Linsenhalter (13) integral mit dem Optikträger (1, 1') ausgebildet ist.

7. Optikträger (1, 1') nach einem der Ansprüche 1 bis 6, **dadurch gekennzeichnet, dass** ein Linsenhalter (13) vorgesehen und mit einer tubusförmigen Aufnahme (14) für wenigstens eine Linse (17) ausgebildet ist, wobei der Optikträger (1, 1') mit dem Linsenhalter (13) verbindbar ist.

8. Optikträger (1, 1') nach Anspruch 7, **dadurch gekennzeichnet, dass** die tubusförmige Aufnahme (14) zur Aufnahme von zwei hintereinander liegenden Linsen (17) ausgebildet ist, die von gegenüberliegenden Endbereichen in den Linsenhalter (13) einsetzbar sind.

9. Optikträger (1, 1') nach einem der vorhergehenden Ansprüche, **dadurch gekennzeichnet, dass** in dem Grundkörper (2) wenigstens eine zwischen den Endbereichen verlaufende Aufnahme (3) vorgesehen ist, in die ein Tubus (4) mit einem Bandpassfilter (5) einsetzbar ist.

10. Optisches Messgerät (M), insbesondere ein Laserentfernungsmesser, mit einem Linsenhalter (13), einem Optikträger (1, 1') und einem Sende- und Empfangssystem, **dadurch gekennzeichnet, dass** der Optikträger (1, 1') gemäß einem der vorhergehenden Ansprüche ausgebildet ist.

11. Optisches Messgerät nach Anspruch 10, **dadurch gekennzeichnet, dass** der Optikträger (1, 1') gemäß Anspruch 6 ausgebildet ist, das Sende- und Empfangssystem eine Leiterplatte (21) mit einer Laserdiode (22) und einer lichtempfindlichen Diode (23), insbesondere einer APD, umfasst und die Leiterplatte (21) eine zu dem Vorsprung (19) des Grundkörpers (2) korrespondierende Aussparung (24) aufweist, in den der Vorsprung (19) eingesetzt ist.

12. Herstellungsverfahren für einen Optikträger (1, 1') nach einem der Ansprüche 1 bis 9, **dadurch gekenntzeichnet**, **dass** der Optikträger (1, 1') im Ceramic Injection Molding Verfahren hergestellt wird.

13. Herstellungsverfahren nach Anspruch 12, **dadurch gekennzeichnet, dass** das Ceramic Injectian Molding Verfahren mit einer Al₂O₃-Keramik, insbesondere mit einer Al₂O₃ und ZrO₃-Keramik, durchgeführt wird.

## Claims

1. Ceramic optical system support (1, 1'), especially for an optical measuring device (M), comprising a basic body (2) on which means for fixing an electrooptical transceiver system for a laser rangefinder are provided, **characterized in that** the basic body (2) has a tubular receptacle which passes axially through the basic body.

2. Optical system support (1, 1') according to Claim 1, **characterized in that** positioning and fastening elements (6), with which a lens (7), in particular a collimator lens, can be mounted on the basic body (2), are provided on the outer side of the basic body (2).

3. Optical system support (1, 1') according to either of Claims 1 and 2, **characterized in that** the basic body (2) has at least one axial projection (19) for fixing an electrooptical transceiver unit (20).

4. Optical system support (1, 1') according to one of the preceding claims, **characterized in that** the optical system support (1, 1') is produced from a ceramic that is at least partially transparent, at least in one wavelength range, in particular a UV-transparent ceramic.

5. Optical system support (1, 1') according to Claim 4, **characterized in that** the optical system support (1, 1') is produced from Al₂O₃ ceramic or an Al₂O₃ and ZrO₃ ceramic.

6. Optical system support (1, 1') according to one of the preceding claims, **characterized in that** a lens holder (13) is formed integrally with the optical system support (1, 1').

7. Optical system support (1, 1') according to one of Claims 1 to 6, **characterized in that** a lens holder (13) is provided and is formed with a. tubular receptacle (14) for at least one lens (17), the optical system support (1, 1') being able to be connected to the lens holder (13).

8. Optical system support (1, 1') according to Claim 7, **characterized in that** the tubular receptacle (14) is designed for receiving two lenses (17) lying one behind the other, which can be inserted into the lens holder (13) from opposite end regions.

9. Optical system support (1, 1') according to one of the preceding claims, **characterized in that** in the basic body (2) there is provided at least one receptacle (3), which extends between the end regions and into which a tube (4) with a bandpass filter (5) can be inserted.

10. Optical measuring device (M), especially a laser rangefinder, comprising a lens holder (13), an optical system support (1, 1') and a transceiver system, **characterized in that** the optical system support (1, 1') is formed according to one of the preceding claims.

11. Optical measuring device according to Claim 10, **characterized in that** the optical system support (1, 1') is formed as provided by Claim 6, the transceiver system comprises a printed circuit board (21) with a laser diode (22) and a light-sensitive diode (23), in particular an APD, and the printed circuit board (21) has a recess (24) corresponding to the projection (19) of the basic body (2), into which recess the projection (19) is inserted.

12. Production process for an optical system support (1, 1') according to one of Claims 1 to 9, **characterized in that** the optical system support (1, 1') is produced by the ceramic injection molding process.

13. Production process according to Claim 12, **characterized in that** the ceramic injection molding process is carried out with an Al₂O₃ ceramic, in particular with an Al₂O₃ and ZrO₃ ceramic.

## Revendications

1. Support d'optique céramique (1, 1'), destiné en particulier à un appareil de mesure optique (M), comprenant un corps de base (2) sur lequel sont prévus des moyens pour fixer un système d'émission et de réception électro-optique pour un dispositif de mesure de distance à laser, **caractérisé en ce que** le corps de base (2) comporte un logement de forme tubulaire pénétrant axialement dans le corps de base.

2. Support d'optique (1, 1') selon la revendication 1, **caractérisé en ce que** des éléments de positionnement et de fixation (6) sont prévus sur la face externe du corps de base (2), au moyen desquels une lentille (7), notamment une lentille de collimation, peut être montée sur le corps de base (2).

3. Support d'optique (1, 1') selon l'une quelconque des revendications 1 ou 2, **caractérisé en ce que** le corps de base (2) comporte au moins une protubérance axiale (19) pour fixer une unité d'émission et de réception (20) électro-optique.

4. Support d'optique (1, 1') selon l'une quelconque des revendications précédentes, **caractérisé en ce que** le support d'optique (1, 1') est fabriqué à partir d'une céramique au moins partiellement transparente dans au moins une région de longueur d'onde, notamment une céramique transparente aux UV.

5. Support d'optique (1, 1') selon la revendication 4, **caractérisé en ce que** le support d'optique (1, 1') est réalisé à partir d'une céramique d'Al₂O₃ ou d'une céramique d'Al₂O₃ et de ZrO₃.

6. Support d'optique (1, 1') selon l'une quelconque des revendications précédentes, **caractérisé en ce qu'**un porte-lentilles (13) est formé de façon solidaire du support d'optique (1, 1').

7. Support d'optique (1, 1') selon l'une quelconque des revendications 1 à 6, **caractérisé en ce qu'**il est prévu un porte-lentilles (13) et qu'il est formé de façon à comporter un logement tubulaire (14) pour au moins une lentille (17), dans lequel le support d'optique (1, 1') peut être relié au porte-lentilles (13).

8. Support d'optique (1, 1') selon la revendication 7, **caractérisé en ce que** le logement tubulaire (14) est formé pour recevoir deux lentilles situées l'une derrière l'autre (17), lesquelles lentilles peuvent être introduites dans le porte-lentilles (13) par l'intermédiaire de zones d'extrémité opposées.

9. Support d'optique (1, 1') selon l'une quelconque des revendications précédentes, **caractérisé en ce qu'**il est prévu au moins un logement (3) s'étendant entre les zones d'extrémité, dans lequel un tube (4) muni d'un filtre passe-bande (5) peut être introduit dans le corps de base (2).

10. Appareil de mesure optique (M), et plus particulièrement, dispositif de mesure de distance à laser, comprenant un porte-lentilles (13), un support d'optique (1, 1') et un système d'émission et de réception, **caractérisé en ce que** le support d'optique (1, 1') est réalisé selon l'une quelconque des revendications précédentes.

11. Appareil de mesure optique selon la revendication 10, caractérisé en que le support d'optique (1, 1') est réalisé selon la revendication 6, en ce que le système d'émission et de réception comprend une carte de circuit imprimé (21) munie d'une diode laser (22) et d'une diode photosensible (23), notamment une diode APD, et en ce que la carte de circuit imprimé (21) comporte un évidement (24) correspondant à la protubérance (19) du corps de base (2) et dans lequel est introduite la protubérance (19).

12. Procédé de fabrication d'un support d'optique (1, 1') selon l'une quelconque des revendications 1 à 9, **caractérisé en ce que** le support d'optique (1, 1') est fabriqué par un procédé de moulage par injection de céramique.

13. Procédé de fabrication selon la revendication 12, **caractérisé en ce que** le procédé de moulage par injection de céramique est mis en oeuvre avec une céramique d'Al₂O₃ notamment avec une céramique d'Al₂O₃ et de ZrO₃.
